# EUROPÄISCHE PATENTSCHRIFT

(11) **EP 2 994 336 B1**
(45) Veröffentlichungstag und Bekanntmachung des Hinweises auf die Patenterteilung: **31.05.2017**
(21) Anmeldenummer: 14741838.8
(22) Anmeldetag: 15.07.2014
(51) Int. Cl.: B60L 5/20, B60L 3/12, G06K 9/20, G06T 7/00, H04N 5/77, H04N 7/18

(54) **SYSTEM ZUR ZUSTANDSERFASSUNG EINES STROMABNEHMERS**
SYSTEM FOR DETECTING THE STATE OF A CURRENT COLLECTOR
SYSTÈME POUR DÉTECTER L'ÉTAT D'UN COLLECTEUR DE COURANT

(30) Priorität: 17.07.2013 DE 102013214022
(43) Veröffentlichungstag der Anmeldung: 16.03.2016
(73) Patentinhaber: Siemens Aktiengesellschaft, 80333 München (DE)
(72) Erfinder: BAHLMANN, Claus, 10707 Berlin (DE); GERSTENBERG, Frank, 10409 Berlin (DE); KLIER, Christian, 14469 Potsdam (DE); VOSS, Frank, 12623 Berlin (DE)
(86) Internationale Anmeldenummer: PCT/EP2014/065100
(87) Internationale Veröffentlichungsnummer: WO 2015/007718

(56) Entgegenhaltungen:
- WO-A1-2009/018612
- JP-A- H05 146 001
- JP-A- 2005 337 714
- KR-A- 20110 062 733

## Beschreibung

Die Erfindung betrifft ein System zur Erfassung eines Zustandes eines Stromabnehmers eines elektrisch angetriebenen Fahrzeugs nach dem Oberbegriff des Patentanspruches 1.

Elektrisch angetriebene Fahrzeuge sind mit einem Stromabnehmer ausgestattet, um elektrischer Energie zwischen einer Oberleitungsanlage und einem elektrischen Antrieb des Fahrzeugs zu übertragen. Solche Fahrzeuge sind als Schienenfahrzeuge, wie etwa elektrische Triebzüge oder elektrische Lokomotiven, oder auch als nicht schienengebundene Fahrzeuge, wie etwa elektrische Busse im Öffentlichen Personennahverkehr oder dieselelektrische Nutzfahrzeuge im Tagebaubetrieb, bekannt. Stromabnehmer weisen gelenkige Gestelle in Stangen-, Scheren- oder Halbscherenform auf, die mittels einer Hubeinrichtung zwischen einer abgesenkten Ruheposition und einer aufgerichteten Betriebsposition verstellbar sind. In der Betriebsposition wird ein elektrischer Schleifkontakt zwischen einem Schleifstück des Stromabnehmers und einem überkopf verlaufenden Fahrdraht einer Oberleitungsanlage hergestellt. Oberleitungsanlagen für Schienenfahrzeuge sind in der Regel einpolig, weisen also nur einen als Hinleiter ausgebildeten Fahrdraht auf, wobei die geerdeten Schienen des Gleises als Rückleiter genutzt werden. Nicht schienengebundene Fahrzeuge weisen Stromabnehmer mit zwei voneinander isolierten Schleifstücken auf, die zwei als Hin- und Rückleiter ausgebildete Fahrdrähte einer zweipoligen Oberleitungsanlage kontaktieren. Während die Kontaktstücke bei Stangenstromabnehmern in zwangsgeführten Polschuhen angeordnet sind, sind sie bei Bügelstromabnehmern als längliche Schleifleisten ausgebildet, die in einer vom Gestell getragenen Wippe gehalten und parallel zu einer Fahrzeugquerachse ausgerichtet sind.

Da Schleifleisten aufgrund der Reibung mit einem Fahrdraht einem betriebsbedingten Verschleiß unterliegen, müssen diese in regelmäßigen Intervallen ausgetauscht werden. Stromabnehmer werden aufgrund ihrer essentiellen Bedeutung für die Energieversorgung des Fahrzeugs einer Sichtprüfung durch einen Wartungspersonal unterzogen, um den Zustand des Stromabnehmers zu kontrollieren. Der Zustand der Schleifleisten wird durch den Abnutzungsgrad der Schleiffläche über die gesamte Arbeitsbreite der Schleifleiste, durch mögliche Defekte, wie Ausbrüche oder Risse, und durch die Position und Ausrichtung der Schleifleiste auf der Wippe bestimmt. Den Zustand des Stromabnehmers bestimmt aber auch die Position und Ausrichtung der Wippe auf dem Gestell oder des Gestells selbst, die aufgrund von Deformationen von ihrer Ursprungsform abweichen und dadurch zu Fehlfunktionen führen können.

Zur Signalisierung des Verschleißzustandes an den Schleifkörpern eines Stromabnehmers ist aus der Offenlegungsschrift DE 10 2004 001 799 A1 eine Sensoreinrichtung bekannt, die aus in den Schleifkörper eingebrachten Sacklöchern und aus einer Überwachungseinheit besteht, die über Übertragungskanäle miteinander in Verbindung stehen. In den Sacklöchern befindet sich ein bei einem bestimmten Verschleißzustand Signale erzeugendes Medium und in den Übertragungskanälen ein diese Signale bis zur Überwachungseinheit übertragendes Medium. Das Signal erzeugende und übertragende Medium kann Druckluft, ein elektrischer Leiter oder Lichtleiter sein.

Die Patentschrift DE 10 2005 042 087 B3 offenbart ein Verfahren zur Zustandserfassung eines Stromabnehmers, der in Längsrichtung zwei Randbereiche sowie eine Mittenposition aufweist, die jeweils mit einer Dehnungsmessstelle versehen sind. An den Dehnungsmessstellen werden mechanische Dehnungen des Stromabnehmers erfasst, die durch die Kontaktkraft zwischen der Stromleitung und dem Stromabnehmer hervorgerufen werden. Die aktuelle Abnutzung eines Schleifelementes des Stromabnehmers wird aus der aktuellen Kontaktkraft, die aus den Dehnungen in den Randbereichen bestimmt wird, und der an der Mittenposition erfassten Dehnung ermittelt. Die Dehnungsmessstellen können durch Faser-Bragg-Gitter-Sensoren gebildet werden.

Die Offenlegungsschrift DE 10 2009 006 392 A1 zeigt eine Anordnung zum Überwachen des betriebsgemäßen Zustandes und Verschleißzustandes von Schleifkontaktvorrichtungen elektrisch angetriebener schienengebundener Fahrzeuge. Die Schleifkontaktvorrichtungen sind an jeweils einer absenkbaren und anhebbaren Pantographen-Vorrichtung angeordnet. Ein Stromversorgungsnetz weist eine oberhalb des Fahrzeugs angeordnete Stromleitung auf, die an einer Vielzahl beabstandet angeordneter Strommasten hängend angeordnet ist. An wenigstens einem Strommast oder an der Stromleitung ist ein Bilderfassungssystem zum automatischen Erfassen von Abbildungen der Schleifkontaktvorrichtung eines vorbeifahrenden Fahrzeugs angeordnet. Das Bilderfassungssystem weist mehrere elektronische Kameras auf, die jeweils unter einem anderen Blickwinkel zur Schleifkontaktvorrichtung ausgerichtet sind. Die Bildaufnahmen werden als ein zusammenhängender Bilddatensatz an einen Computer zur Bildverarbeitung und/oder Auswertung übertragen. Ein menschlicher Operator begutachtet nun die aufgenommenen Bilder der Schleifkontaktvorrichtung visuell auf einem Monitor, wobei er durch eine Programmanwendung mithilfe softwarebasierender Bilderkennung entlastet oder unterstützt werden kann.

KR 2011 0062733 A offenbart eine Stromabnehmer-Schleifleiste aus Metallpulver und Kohlenstoff, die eine rechteckige Form und Verschleißmarkierungseinheiten aufweist. Eine Verschleißmarkierungseinheit ist zwischen Schichten der Schleifleiste eingelagert und besteht aus einem farbfluoreszierenden Material. Durch die farbliche Verschleißmarkierungsstruktur der Schleifleiste soll ein Benutzer in die Lage versetzt werden, den Verschleißzustand der Schleifleiste einfach zu überprüfen.

Aus JP 2009 244023 A und JP 2008 104312 A sind Messeinrichtungen bekannt, die einen auf dem Dach eine Fahrzeugs angeordneten Linientaster zur Aufnahme eines Videobildes des Stromabnehmers und einen Bildverarbeitungsteil zur Auswertung des Videobildes aufweist. Der Stromabnehmer ist mit einer Markierung versehen, die aus einem Muster von Licht reflektierenden Streifen und nicht Licht reflektierenden Streifen besteht. Gemäß JP 2009 244023 A kann über die vertikale Position der Markierung die aktuelle Höhenlage des Stromabnehmers auch bei Hintergrundänderungen durch während einer Tunneleinfahrt oder eine Brückenüberfahrt in Abhängigkeit der Zeit aufgenommen werden. Gemäß JP 2008 104312 A kann über die Verdrehung zweier im Bereich von seitlichen Federungen des Stromabnehmers versehener Markierungen, die einen trapezförmigen Streifen aufweisen, die jeweilige Einfederung und daraus die aktuelle Kontaktkraft zwischen Stromabnehmer und Fahrdraht in Abhängigkeit der Zeit aufgenommen werden.

Häufig ist die Qualität der aufgenommenen Videobilder nicht gut genug, dass eine automatisierte Zustandserkennung sicher möglich ist. Es muss vielmehr auf die Inaugenscheinnahme der Videobilder durch erfahrenes Wartungspersonal zurückgegriffen werden, was die Zustandserfassung eines Stromabnehmers zeitintensiv und kostenaufwändig macht.

Der Erfindung liegt daher die Aufgabe zugrunde, ein gattungsgemäßes System bereitzustellen, mit welchem der aktuelle Zustand eines Stromabnehmers schneller und sicherer automatisch erfasst werden kann.

Die Aufgabe wird gelöst durch ein System zur Erfassung eines Zustandes eines Stromabnehmers der eingangs genannten Art mit den im kennzeichnenden Teil des Patentanspruches 1 angegebenen Merkmalen. Ausgehend von einer Videokameraeinrichtung zur digitalen Bildaufnahme des Stromabnehmers und einer Bildauswertungseinrichtung zur datentechnischen Auswertung der Bildaufnahmen, wobei der Stromabnehmer eines elektrisch angetriebenen Fahrzeugs optisch erfassbare Markierungen aufweist, deren Position und/oder Form und/oder Flächeninhalt und/oder Farbe durch die Bildauswertungseinrichtung automatisch erfassbar sind, wobei eine Schleifleiste erfindungsgemäß eine sich in Verschleißrichtung erstreckende Markierung aufweist, deren Position und/oder Form und/oder Flächeninhalt und/oder Farbe sich mit zunehmendem Verschleiß ändert. Kern der Erfindung ist es, den zu untersuchenden Stromabnehmer mit Markierungen auszustatten, deren Veränderungen durch Verschleiß oder Deformationen schnell und sicher auf einem aufgenommenen Videobild des Stromabnehmers erkennbar sind. Durch die Einschränkung der Bildauswertung auf die Markierungen können in einem ersten Grobschritt interessierende Bildbereiche ermittelt werden, in welchen die Markierungen liegen, und in einem zweiten Feinschritt nur die Bilddaten der interessierenden Bildbereiche zur Ermittlung der genauen Merkmale der Markierungen, wie Position, Form, Flächeninhalt oder Farbe, ausgewertet werden. Dies spart erheblich Rechenzeit bei der Bildauswertung ein. Außerdem vereinfacht dies die Auswertung, so dass der Zustand des Stromabnehmers sicherer erfassbar ist. Es können die Schleifleiste durchsetzende oder an diese von außen angebrachte Markierungen in einer Kontrastfarbe oder in aufeinander geschichteten Kontrastfarbschichten vorgesehen sein, die durch den Verschleiß abgetragen werden und dabei ihre geometrische Form oder ihren Flächeninhalt oder ihre freigelegte Farboberfläche ändern.

Vorzugsweise weist die Schleifleiste eines erfindungsgemäßen Systems auf ihrer Arbeitsbreite eine durchgehende Markierung oder mehrere voneinander beabstandete Markierungen auf. Durch den Abstand der Markierungen lässt sich auf einfache Weise die Ortsgenauigkeit der Verschleißzustandserfassung über die Arbeitsbreite festlegen.

In einer vorteilhaften Ausgestaltung des erfindungsgemäßen Systems weist die Schleifleiste außerhalb ihrer Arbeitsbreite eine Markierung als Referenz auf. Hierdurch kann die dem Verschleiß ausgesetzte Markierung direkt auf dem Videobild mit den Vergleichsmarkierungen außerhalb des Arbeitsbereichs der Schleifleiste verglichen werden.

In einer vorteilhaften Ausgestaltung des erfindungsgemäßen Systems weist der Stromabnehmer mehrere verteilt angeordnete Markierungen auf, die bei betriebsgemäßem Zustand des Stromabnehmers eine definierte gegenseitige Lage aufweisen. Als Positionsmarkierungen kommen hier sowohl aufgebrachte Farbmarkierungen als auch Formbauteile in Betracht, die auf dem Videobild eine schnelle Bestimmung der auf dem Stromabnehmer markierten Position erlauben. Die Bildauswertung erfolgt hier durch den Vergleich einer aufgenommenen Ist-Relativlage mit einer in der Bildauswertungseinrichtung gespeicherten Soll-Relativlage, die einem konstruktionsgemäßen Betriebszustand des Stromabnehmers entspricht. Abweichungen können auf eine Deformation oder Verwindung von Bauteilen des Stromabnehmers hindeuten.

In einer bevorzugten Ausführungsform des erfindungsgemäßen Systems ist am Stromabnehmer ein Kontrastschild angebracht, das in Blickrichtung einer Videokamera eine kontrastreiche Hintergrundmarkierung zu wenigstens einem Teil des Stromabnehmers bildet. Hierdurch können neben Ausbrüchen von Schleifleistenteilen, die durch einen veränderten Umriss der Schleifleiste auf dem Videobild erkennbar ist, auch Risse im Körper der Schleifleiste besser erfasst werden.

Weitere Eigenschaften und Vorteile der Erfindung ergeben sich aus nachfolgender Beschreibung von Ausführungsbeispielen anhand der Zeichnungen, in deren
- FIG 1: ein erstes Ausführungsbeispiel einer Markierung an einer Schleifleiste,
- FIG 2: ein zweites Ausführungsbeispiel einer Markierung an einer Schleifleiste,
- FIG 3: ein drittes Ausführungsbeispiel einer Markierung an einer Schleifleiste,
- FIG 4: ein viertes Ausführungsbeispiel von Markierungen an Schleifleisten und einer Wippe,
- FIG 5: eine fünftes Ausführungsbeispiel von Markierungen an Schleifleisten,
- FIG 6: ein sechstes Ausführungsbeispiel von Markierungen an einem Stromabnehmer und
- FIG 7: ein siebentes Ausführungsbeispiel von Markierungen an Schleifleisten
eines erfindungsgemäßen Zustandserfassungssystems in perspektivischen Darstellungen schematisch veranschaulicht sind.

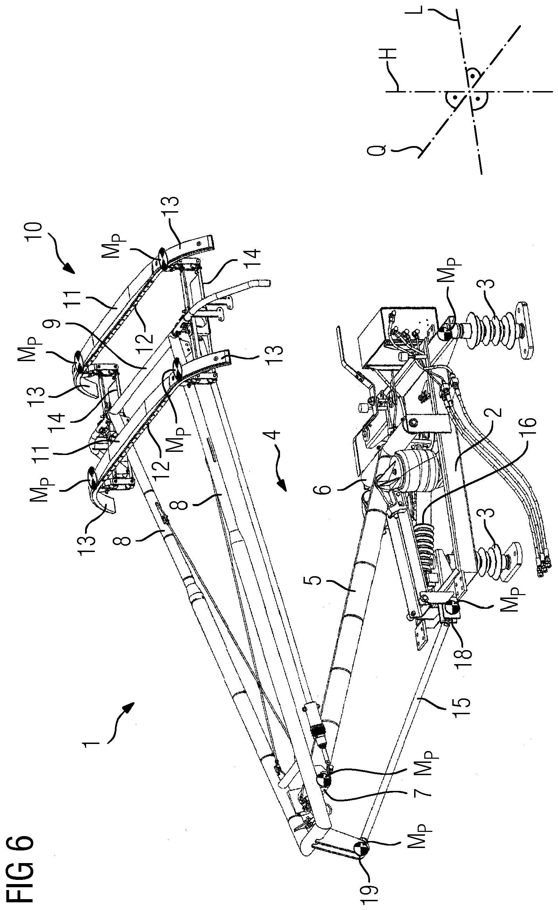

Ein erfindungsgemäßes System zur Erfassung des Zustandes eines Stromabnehmers 1, der gesamthaft in FIG 6 dargestellt ist, umfasst eine nicht dargestellte Videokameraeinrichtung zur digitalen Bildaufnahme des Stromabnehmers 1 auf einem in Fahrt befindlichen Fahrzeug. Die Videokameraeinrichtung kann eine oder mehrere an einer fahrstreckenseitigen Erfassungsstelle angeordnete Videokameras aufweisen, die den Stromabnehmer 1 aus unterschiedlichen Aufnahmerichtungen aufnehmen können. Die Videokameras können beispielsweise an einem Ausleger einer Oberleitungsanlage zur Elektrifizierung einer Fahrstrecke, etwa eines Schienengleises oder einer Autobahn, installiert sein. Die Bildaufnahmen werden einer ebenfalls nicht dargestellten Bildauswertungseinrichtung, die an der Erfassungsstelle oder in einer Auswertungszentrale angeordnet sein kann, zur datentechnischen Auswertung zugeführt. Die Bildauswertungseinrichtung umfasst Mittel zur Bearbeitung elektronischer Bilddaten, die Rechen- und Speichermittel mit ausführbaren Programmen zur Bildbearbeitung aufweisen. Zur verbesserten Bildauswertung hinsichtlich des Stromabnehmerzustandes weist der Stromabnehmer 1 Markierungen M auf, deren Position und/oder Form und/oder Flächeninhalt und/oder Farbe auf den aufgenommenen Videobildern durch die Bildauswertungseinrichtung sicher automatisch erfassbar sind.

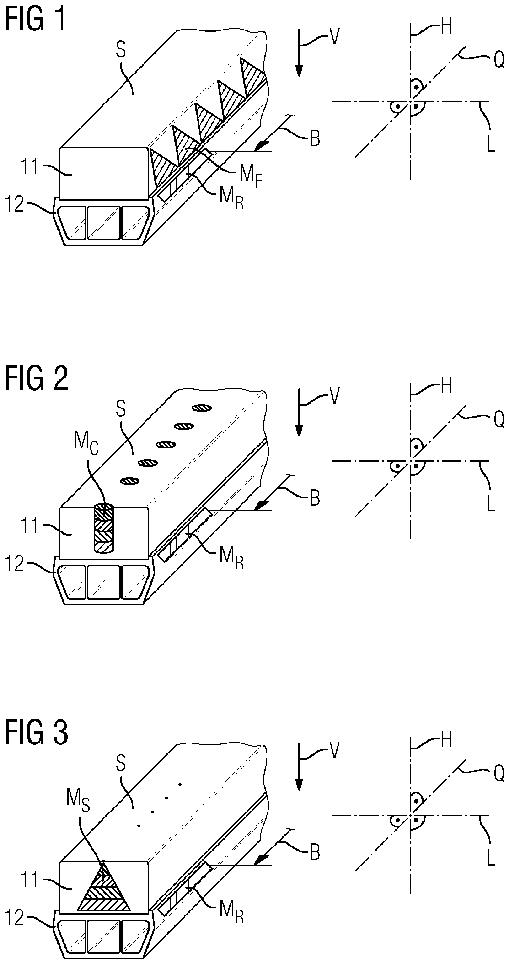

Gemäß FIG 1 bis FIG 3 ist eine Schleifleiste 11 des Stromabnehmers 1 auf einem als Hohlprofil ausgebildeten Schleifleistenhalter 12 festgesetzt. Die Schleifleiste 11 hat eine längliche Form, die sich parallel zu einer Fahrzeugquerachse Q erstreckt, und weist einen im Wesentlichen rechteckigen Querschnitt auf. Die Schleifleiste 11 kann aus Kohle oder Kupfer bestehen und beschleift im Betrieb mit ihrer nach oben weisenden Schleiffläche S einen nicht dargestellten Fahrdraht der Oberleitungsanlage. In einem Zusammenspiel aus dem Verlauf des Fahrdrahtes relativ zum Fahrweg, aus möglichen Spurabweichungen des Fahrzeugs und aus Stellbewegungen des Stromabnehmers quer zur Fahrzeuglängsachse L wird versucht, den Schleifkontakt mit dem Fahrdraht innerhalb einer gewissen Arbeitsbreite B zu halten, die nicht die volle Breite der Schleifleiste 11 ausschöpft. Im Betrieb wird die Schleifleiste 11 auf der Arbeitsbreite B abgeschliffen, so dass sich die Schleiffläche S in eine Verschleißrichtung V, die parallel zu einer Fahrzeughochachse H verläuft, mehr oder weniger gleichmäßig absenkt.

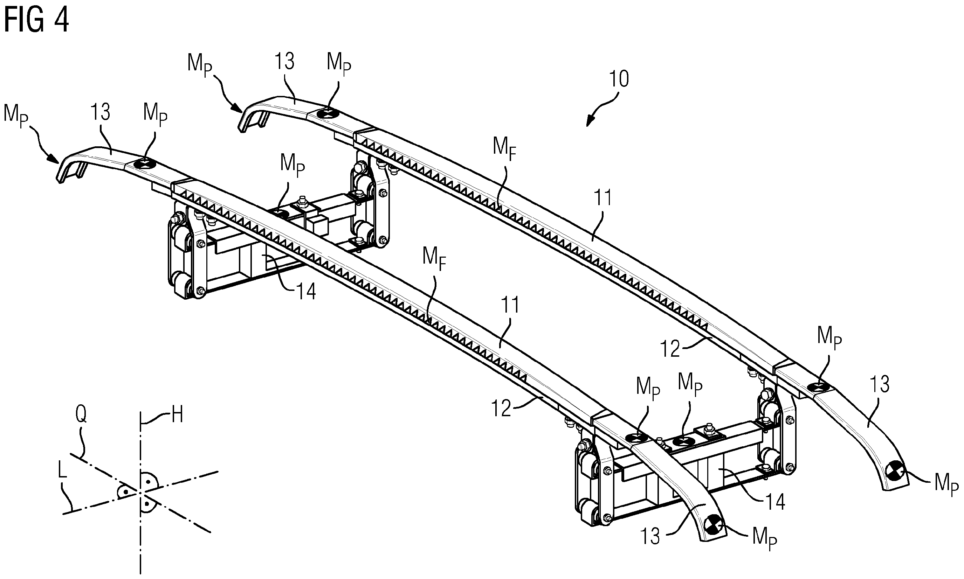

Gemäß FIG 1 und FIG 4 sind an sich gegenüber liegenden Längsseiten der Schleifleiste 11 Formmarkierungen M_{F} in einer Kontrastfarbe, beispielsweise in roter Farbe auf einer Kohleschleifleiste, aufgebracht, die aus einer Aneinanderreihung von Dreiecksflächen besteht. Die Dreiecksflächen grenzen mit ihren Grundseiten am Schleifleistenhalter 12 und verjüngen sich nach oben bis zu ihren den Grundseiten gegenüber liegenden Spitzen an der Kante der Längsseiten zur Schleiffläche S. Mit zunehmendem Verschleiß werden die Spitzen der Dreiecksflächen abgetragen, so dass die Formmarkierungen M_{F} die Form von Trapezen oder Vierecken annehmen. Die Formen und Abmessungen der aufgenommenen Formmarkierungen M_{F} sind bildverarbeitungstechnisch einfach und sicher zu ermitteln, so dass aus der jeweiligen Höhe einer Farbmarkierung M_{F} auf die Verschleißreserve beziehungsweise auf den erlittenen Verschleiß an dieser Stelle der Schleifleiste 11 geschlossen werden kann. Besonders einfach erfassbar ist der Verschleiß, wenn auf den aufgenommenen Videobildern ein Vergleich zu unverschlissenen Formmarkierungen M_{F} außerhalb der Arbeitsbreite B möglich ist. Dieser Randbereich der Schleifleiste 11 ist daher mit streifenförmigen Referenzmarkierungen M_{R} auf dem Schleifleistenhalter 12 gekennzeichnet.

Gemäß FIG 2 ist die Schleifleiste 11 über ihre Breite von einer Reihe säulenförmiger Farbmarkierungen M_{C} durchsetzt, die sich in Verschleißrichtung V erstrecken und aus aufeinander gestapelten Segmenten unterschiedlicher Farben zusammengesetzt sind. Auf der Schleiffläche S erscheint dann die Farbmarkierungen M_{C} in einer dem jeweiligen Verschleiß entsprechenden Farbe, die jeweils einfach und sicher aus aufgenommenen Videobildern erkennbar ist. Die Feinheit der Farbmarkierungen M_{C} kann dann über die jeweiligen Höhen der einzelnen Farbsegmente vorgegeben werden.

Gemäß FIG 3 ist die Schleifleiste 11 von einer Flächeninhaltsmarkierung M_{S} durchsetzt. Die Flächeninhaltsmarkierung M_{S} weist einen dreiecksförmigen Querschnitt auf, und ist als ein sich über die Breite der Schleifleiste 11 kontinuierlich oder abschnittsweise erstreckender Farbeinschluss ausgebildet. Der dreiecksförmige Querschnitt grenzt mit seiner Grundseite am Schleifleistenhalter 12 und verjüngt sich nach oben bis zu seiner der Grundseite gegenüber liegenden Spitze an der Schleiffläche S. Mit zunehmendem Verschleiß wird an der Schleiffläche die Flächeninhaltsmarkierung M_{S} als durchgehender oder unterbrochener Streifen mit zunehmendem Flächeninhalt sichtbar und damit durch die Bildauswertung erkennbar. Die verschleißabhängige Verbreiterung des Streifens wird durch den Spitzenwinkel des dreiecksförmigen Querschnittes der Flächeninhaltsmarkierung M_{S} vorgegeben. Zur Verbesserung der Erkennbarkeit des Verschleißes auf den Videobildern kann die Flächeninhaltsmarkierung M_{S} mit einer als Farbschichtenaufbau ausgebildeten Farbmarkierung M_{C} gemäß FIG 2 kombiniert werden.

In allen - untereinander auch kombinierbaren - Ausführungen von optisch erfassbaren Markierungen M nach FIG 1 bis FIG 3 kann der Verlauf des Verschleißes über die Arbeitsbreite B der Schleifleiste 11 sicher erkannt werden.

Gemäß FIG 4 weist eine Wippe 10 des Stromabnehmers 1 zwei parallel zueinander und zur Fahrzeugquerachse Q verlaufende Schleifleisten 11 auf, die bezüglich der Fahrzeuglängsachse L hintereinander angeordnet sind. Die Schleifleistenhalter 12 weisen an ihren seitlichen Enden nach unten gebogene Endhörner 13 auf, die ein seitliches Auflaufen eines Fahrdrahtes auf die Schleifleisten 11 erleichtern, und sind über zwei Parallelogrammführungen 14 miteinander und mit einem Scheitelrohr 9 des Stromabnehmers 1 verbunden. An vorgegebenen Positionen sind auf die Wippe 10 Positionsmarkierungen M_{P} angebracht, die eine konstruktionsbedingt definierte Relativlage zueinander aufweisen. Eine Positionsmarkierung M_{P} kann durch ein kreisförmiges Zeichen mit farblich unterschiedlichen Kreissegmenten gebildet sein, so dass die zu markierende Position durch den Kreismittelpunkt definiert ist und auf aufgenommenen Videobildern einfach und sicher erkannt wird. Positionsmarkierungen M_{P} sind beispielsweise an den äußeren Enden der Endhörner 13 sowie am Übergang zu den Schleifleistenhaltern 12 angeordnet. In der Bildauswertung kann nun aus einem Vergleich der erfassten Ist-Relativlage der Positionsmarkierungen M_{P} mit einer gespeicherten Soll-Relativlage geschlossen werden, ob jede der Schleifleisten 11 beziehungsweise Schleifleistenhalter 12 und Endhörner 13 Deformationen, wie zum Beispiel Verbiegungen oder Verwindungen, aufweisen. Positionsmarkierungen M_{P} können darüber hinaus in einer mittigen Lage auf den Parallelogrammführungen 14 angebracht sein. Hierdurch ist es möglich auch die Ist-Position und -Lage der Schleifleisten 11 zueinander und innerhalb der Wippe 10 bildverarbeitungstechnisch zu vermessen und mit SollPositionen und -Lagen zu vergleichen. Abweichungen deuten auf Deformationen oder Beschädigungen dieser Bauteile hin.

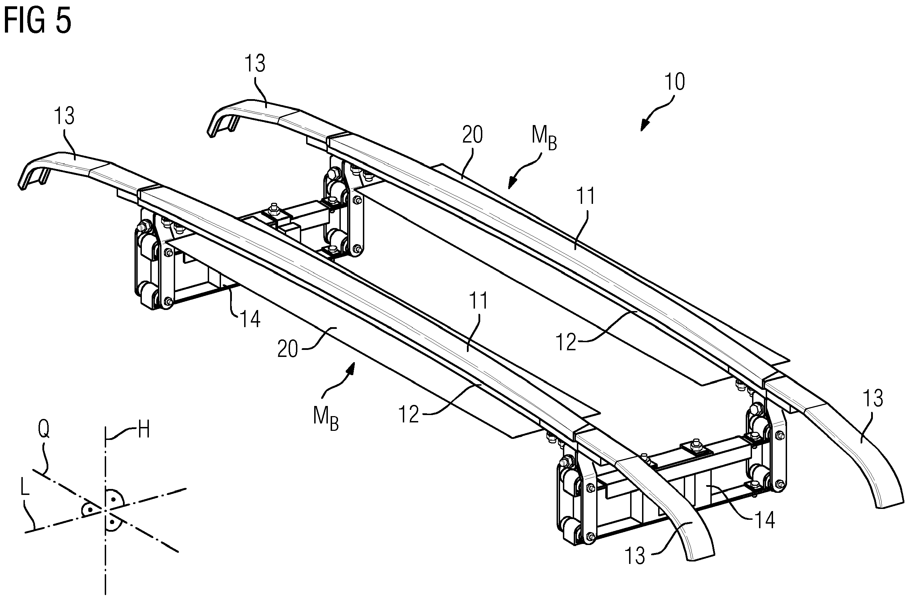

Gemäß FIG 5 sind an der Unterseite der Schleifleistenhalter 12 flächige Kontrastschilde 20 angeordnet, die mit einer gegenüber dem Material der Schleifleisten 11 kontraststarken Farbgebund versehen sind. Durch geeignete Anordnung und Ausrichtung relativ zur Aufnahmerichtung einer Videokamera bilden die Kontrastschilde 20 Hintergrundmarkierungen M_{B}, die es der Bildauswertung erlauben, die Silhouetten und auch den Körper der Schleifleisten 11 auf den Videoaufnahmen besser zu erkennen, um Ausbrüche aus oder sogar Risse in den Schleifleisten 11 automatisiert festzustellen.

Gemäß FIG 6 weist ein Stromabnehmer 1 einen Grundrahmen 2 auf, der sich über elektrische Isolatoren 3 auf einem nicht dargestellten Fahrzeug abstützt. Der Stromabnehmer 1 weist ein gelenkiges Gestell 4 auf, welches einen mit dem Grundrahmen über ein unteres Gelenk 6 verbundenen Unterarm 5 und einen mit dem Unterarm 5 über ein oberes Gelenk 7 verbundenen Oberarm 8 umfasst. Der Oberarm 8 weist zwei V-förmig vom oberen Gelenk 7 auseinander laufende Holme auf, deren Enden durch ein parallel zur Fahrzeugquerachse Q verlaufendes Scheitelrohr 9 verbunden sind. Das Scheitelrohr 9 bildet das Drehgelenk der Wippe 10, um welches die beiden die Schleifleisten 11 tragenden Parallelogrammführungen 14 drehbar gelagert sind. Am Grundrahmen 2 ist eine Hubeinrichtung 16 angeordnet, die eine über ein rahmenseitiges Gelenk 18 verbundene Stellstange 15 betätigt. Über ein gestellseitiges Gelenk 19 ist die Stellstange 15 mit dem Oberarm 8 verbunden. Durch Betätigung der Hubeinrichtung 16 kann das halbscherenartige Pantographen-Gestell 4 die Wippe 10 zwischen einer unteren Ruheposition und einer oberen Betriebsposition, in der die Schleifleisten 11 an den nicht dargestellten Fahrdraht zur Herstellung eines Schleifkontaktes gepresst werden. Damit bei Hub- und Senkbewegungen der Wippe 10 die Schleifleisten 11 auf gleicher Höhe gehalten werden, sind eine der Parallelogrammführungen 14 und der Unterarm 5 durch eine Lenkerstange 17 gekoppelt. Neben den schon geschilderten Positionsmarkierungen M_{P} an der Wippe 10 sind auch Positionsmarkierungen M_{P} an den Gelenken 7, 18 und 19 sowie am Grundrahmen aufgebracht. Aufgrund ihrer Zwangsführung können sich die Positionsmarkierungen M_{P} auf den Gelenken 7 und 19 sowie die Positionsmarkierungen M_{P} auf der Wippe 10 nur auf definierten Trajektorien bewegen, die eine feste Relativlage zu den festen Positionsmarkierungen M_{P} am Grundrahmen 2 und am Gelenk 18 haben. Eine mittels Bildauswertung erfasste Abweichung der Positionsmarkierungen M_{P} von ihren vorgegebenen Trajektorien lässt auf Deformationen im Gestell 4 oder der Wippe 10 schließen und können auf eine eingeschränkte oder fehlende Betriebstauglichkeit des Stromabnehmers 1 hindeuten.

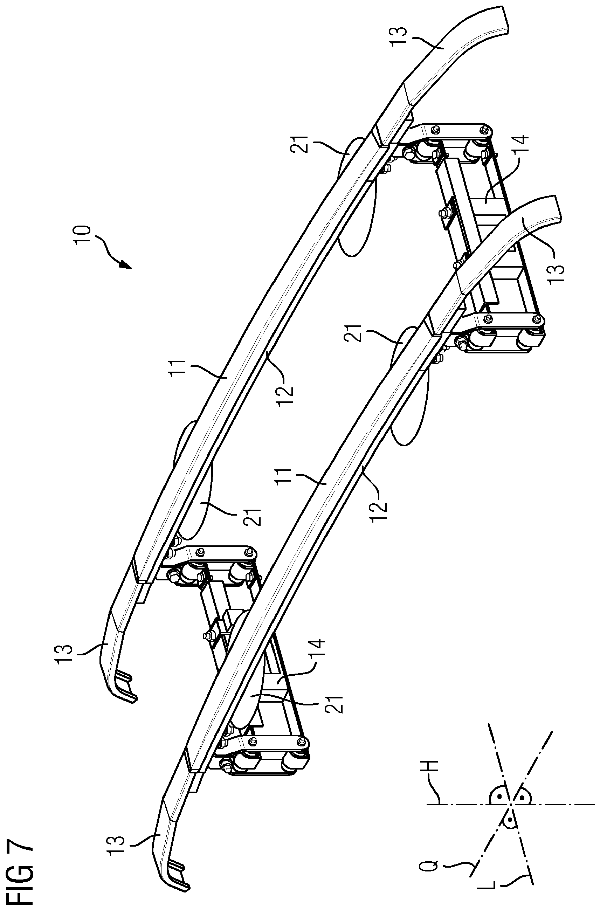

Gemäß FIG 7 können Positionsmarkierungen M_{P} auch durch Formbauteile 21 gebildet werden, die an definierten Positionen der Wippe 10 eines Stromabnehmers 1 angebracht sind und eine durch Bildauswertung einfach erfassbare äußere Begrenzungslinie der Bauteilform aufweisen. Im dargestellten Ausführungsbeispiel sind an jeden Schleifleistenhalter 12 im Endbereich der Schleifleisten 11 kreisrunde Formbauteile 21 montiert, deren Mittelpunkt eine definierte Position und deren Flächen eine definierte Ebene bestimmen. In betriebsgemäßem Zustand des Stromabnehmers 1 können die vier Formbauteile 21 ein und dieselbe Ebene definieren. Durch Erfassung der gegenseitigen Ist-Lage dieser Positionsmarkierungen M_{P} sowie der sich durch die Aufnahmerichtung der Videokamera ergebenden elliptischen Ist-Formen der äußeren Begrenzungslinie der Formbauteile 21 kann auf Deformationen, wie Verbiegungen oder Verwindungen, der Bauteile der Wippe 10 geschlossen werden.

## Patentansprüche

1. System zur Erfassung eines Zustandes eines Stromabnehmers (1) eines elektrisch angetriebenen Fahrzeugs, umfassend eine Videokameraeinrichtung zur digitalen Bildaufnahme des Stromabnehmers (1) und eine Bildauswertungseinrichtung zur datentechnischen Auswertung der Bildaufnahmen, wobei der Stromabnehmer (1) optisch erfassbare Markierungen (M_{P}, M_{F}, M_{S}, M_{C}, M_{B}) aufweist, deren Position und/oder Form und/oder Flächeninhalt und/oder Farbe durch die Bildauswertungseinrichtung automatisch erfassbar sind, **dadurch gekennzeichnet, dass** eine Schleifleiste (11) des Stromabnehmers (1) eine sich in Verschleißrichtung (V) erstreckende Markierung (M_{P}, M_{F}, M_{S}, M_{C}) aufweist, deren Position und/oder Form und/oder Flächeninhalt und/oder Farbe sich mit zunehmendem Verschleiß ändert.

2. System nach Anspruch 1, wobei die Schleifleiste (11) auf ihrer Arbeitsbreite (B) eine durchgehende Markierung (M_{P}, M_{F}, M_{S}, M_{C}) oder mehrere voneinander beabstandete Markierungen (M_{P}, M_{F}, M_{S}, M_{C}) aufweist.

3. System nach Anspruch 2, wobei die Schleifleiste (11) außerhalb ihrer Arbeitsbreite (B) eine Markierung (M_{R}) als Referenz aufweist.

4. System nach einem der Ansprüche 1 bis 3, wobei der Stromabnehmer (1) mehrere verteilt angeordnete Markierungen (M_{P}) aufweist, die bei betriebsgemäßem Zustand des Stromabnehmers (1) eine definierte gegenseitige Lage aufweisen.

5. System nach einem der Ansprüche 1 bis 4, wobei am Stromabnehmer ein Kontrastschild (20) angebracht ist, das in Blickrichtung einer Videokamera eine kontrastreiche Hintergrundmarkierung (M_{B}) zu wenigstens einem Teil des Stromabnehmers (1) bildet.

## Claims

1. System for detecting a state of a current collector (1) of an electrically driven vehicle, comprising a video camera device for digitally recording images of the current collector (1) and an image evaluating device for the data evaluation of the image recordings, wherein the current collector (1) has optically detectable markings (M_{P}, M_{F}, M_{S}, M_{C}, M_{B}) whose position and/or shape and/or surface area and/or colour can be detected by the image evaluating device in an automated manner, **characterised in that** a collector strip (11) of the current collector (1) has a marking (M_{P}, M_{F}, M_{S}, M_{C}) which extends in the direction of wear (V) and whose position and/or shape and/or surface area and/or colour changes with increasing wear.

2. System according to claim 1, wherein the collector strip (11) has a continuous marking (M_{P}, M_{F}, M_{S}, M_{C}) or a plurality of separate markings (M_{P}, M_{F}, M_{S}, M_{C}) across its working width (B).

3. System according to claim 2, wherein the collector strip (11) has a marking (M_{R}) outside its working width (B) as a reference.

4. System according to one of claims 1 to 3, wherein the current collector (1) has a plurality of markings (M_{P}) which are arranged in a distributed manner and have a defined reciprocal location in an operational state of the current collector (1).

5. System according to one of claims 1 to 4, wherein a contrast panel (20) is attached to the current collector, forming a high-contrast background marking (M_{B}) for at least part of the current collector (1) in the viewing direction of a video camera.

## Revendications

1. Système de détection d'un état d'un collecteur (1) de courant d'un véhicule électrique, comprenant un dispositif à caméra vidéo d'enregistrement d'images numériques du collecteur (1) de courant et un dispositif d'exploitation d'images, pour l'exploitation en technique des données des enregistrements d'images, le collecteur (1) de courant ayant des repères (M_{P}, M_{F}, M_{S}, M_{C}, M_{B}) détectables visuellement, dont la position et/ou la forme et/ou le contenu de surface et/ou la couleur peuvent être détectés automatiquement par le dispositif d'exploitation d'images, **caractérisé en ce qu'**un frotteur (11) du collecteur (1) de courant a un repère (M_{P}, M_{F}, M_{S}, M_{C}) s'étendant dans la direction (V) d'usure, dont la position et/ou la forme et/ou le contenu de surface et/ou la couleur se modifient au fur et à mesure que l'usure augmente.

2. Système suivant la revendication 1, dans lequel le frotteur (11) a, sur sa largeur (B) de travail, un repère (M_{P}, M_{F}, M_{S}, M_{C}) continu, ou plusieurs repères (M_{P}, M_{F}, M_{S}, M_{C}) à distance les uns des autres.

3. Système suivant la revendication 2, dans lequel le frotteur (11) a, comme référence, un repère (M_{R}) à l'extérieur de sa largeur (B) de travail.

4. Système suivant l'une des revendications 1 à 3, dans lequel le collecteur (1) de courant a plusieurs repères (M_{P}) répartis, qui, lorsque le collecteur (1) de courant est en état conforme de fonctionnement, ont une position mutuelle définie.

5. Système suivant l'une des revendications 1 à 4, dans lequel il est mis, sur le collecteur de courant, un panneau (20) de contraste, qui forme, dans la direction de visualisation d'une caméra vidéo, un repère (M_{B}) d'arrière-plan très contrasté par rapport à au moins une partie du collecteur (1) de courant.
